# EUROPÄISCHE PATENTANMELDUNG

(11) **EP 4 555 863 A1**
(43) Veröffentlichungstag der Anmeldung: **21.05.2025**
(21) Anmeldenummer: 24207489.6
(22) Anmeldetag: 18.10.2024
(51) Int. Cl.: A21B 1/40, A21B 1/22, F24C 7/08

(54) **BACKOFEN SOWIE VERFAHREN ZUM BETRIEB EINES BACKOFENS**

(30) Priorität: 20.11.2023 DE 102023211513
(71) Anmelder: Werner & Pfleiderer Lebensmitteltechnik GmbH, 91550 Dinkelsbühl (DE)
(72) Erfinder: Dannenhauer, Bernd, 91550 Dinkelsbühl (DE); Blümel, Frank, 91614 Mönchsroth (DE)
(74) Vertreter: Rau, Schneck & Hübner Patentanwälte Rechtsanwälte PartGmbB

(57) **Zusammenfassung**

Ein Backofen (1) hat mindestens einen Backraum (B1, B2) und ein Heizquelle (2) zur Beheizung des Backraums (B1, B2). Die Heizquelle (2) hat mindestens ein elektrisches Heizelement (3i) und eine Leistungsschaltung (6ᵢ) zur Bestromung des elektrischen Heizelements (3ᵢ). Eine Steuereinrichtung (7) steht mit der Leistungsschaltung (6ᵢ) zur variablen Vorgabe einer Heizleistung in Signalverbindung. Das elektrische Heizelement (3i) wird mit der vorgegebenen Heizleistung betrieben.

## Beschreibung

Der Inhalt der deutschen Patentanmeldung DE 10 2023 211 513.1 wird durch Bezugnahme hierin aufgenommen.

Die Erfindung betrifft einen Backofen mit mindestens einem Backraum und einer Heizquelle zur Beheizung des Backraums mit mindestens einem elektrischen Heizelement. Weiter betrifft die Erfindung ein Verfahren zum Betrieb eines derartigen Backofens.

Ein Backofen der eingangs genannten Art ist bekannt aus der DE 10 2020 211 020 A1 und aus der DE 10 2011 003 122 B4.

Es ist eine Aufgabe der vorliegenden Erfindung, einen Backofen der eingangs genannten Art derart weiterzubilden, dass ein standardisierter Aufbau der Heizquelle ermöglicht ist.

Diese Aufgabe ist erfindungsgemäß gelöst durch einen Backofen mit den in Anspruch 1 angegebenen Merkmalen.

Erfindungsgemäß wurde erkannt, dass durch die Schaffung der Möglichkeit einer variablen Leistungsvorgabe über die Steuereinrichtung und die Leistungsschaltung ein Backofen mit elektrischen Heizelementen jeweils gleicher Nennleistung ausgerüstet sein kann. Die tatsächliche vorgegebene Heizleistung, die regelmäßig kleiner ist als die Nennleistung des Heizelements, wird dann mit der Steuereinrichtung variabel vorgegeben. Dies vereinfacht den Aufbau des Backofens und insbesondere einen Austausch elektrischer Heizelemente bei Wartung oder Reparatur. Solange die Nennleistung höher ist als die von der Steuereinrichtung vorgegebene Heizleistung, spielt eine Änderung der Nennleistung des Heizelements keine Rolle. Soweit unerwünschte Variationen im Backverhalten des Backofens auftreten, können diese über eine entsprechend geänderte Vorgabe durch die Steuereinrichtung ausgeglichen werden und erfordern ihrerseits keinen Austausch des jeweiligen Heizelements.

Bei dem elektrischen Heizelement kann es sich um ein Widerstands-Heizelement insbesondere in Form eines Heizstabes handeln.

Bei der Ausführung des Backofens als Etagenbackofen kommen die Vorteile einer variablen Leistungsvorgabe für die elektrischen Heizelemente besonders gut zum Tragen.

Die elektrischen Heizelemente können gezielt so in ihrer Leistung vorgegeben werden, dass die Backräume gezielt unterschiedlich oder auch gezielt gleich betrieben werden können.

Eine Leistungsvorgabe durch Vorgabe einer Einschaltdauer nach Anspruch 2 hat sich als besonders effektiv herausgestellt.

Zur Leistungsvorgabe können insbesondere die grundsätzlich bekannten Varianten
- Steuerung über ein pulsweiten-moduliertes Signal,
- Phasenanschnittsteuerung,
- Schwingungspaket-Steuerung,
gegebenenfalls auch in Kombination, zum Einsatz kommen.

Bei der Ausführung des Backofens mit Heizelementen gleicher Nennleistung nach Anspruch 3 kommen die vorstehend diskutierten Vorteile der variablen Leistungsvorgabe besonders gut zum Tragen.

Aufbau einer Ausführung der elektrischen Heizelemente als Oberhitze- und als Unterhitze-Heizelemente nach Anspruch 4 kommen die Vorteile der variablen Leistungsvorgabe besonders gut zum Tragen. Je nach Anforderung können Ober- und Unterhitze gezielt unterschiedlich oder aber auch gezielt gleich betrieben werden.

Mehrere Oberhitze-Heizelemente nach Anspruch 5 ermöglichen eine gezielte Beeinflussung einer Oberhitze-Backraum-Beheizung über eine Erstreckung des Backraumes.

Entsprechende Vorteile hat der Einsatz mehrerer Unterhitze-Heizelemente nach Anspruch 6. Entsprechend einer Unterteilung der Oberhitze beziehungsweise der Unterhitze in mehrere Heizelemente kann der zugehörige Backraum in mehrere Backraumzonen unterteilt sein, wobei jeder Backraumzone mindestens eines der Heizelemente, beispielsweise mindestens ein Oberhitze-Heizelement und/oder mindestens ein Unterhitze-Heizelement zugeordnet ist. Über die Steuereinrichtung kann dann eine Backraumzonenabhängige Backtemperatur vorgegeben werden, beziehungsweise es kann die Backraumtemperatur Backraumzonenabhängig geregelt werden. Ofen- oder betriebsbedingte Backtemperatur-Unterschiede zwischen den Backzonen können dann ausgeglichen werden.

Eine Tastgrad-Vorgabe der Einschaltdauer nach Anspruch 7 hat sich in der Praxis bewährt. Eine derartige Vorgabe kann mithilfe einer Pulsweiten-Modulation erfolgen.

Bei einer alternativen Ausführung des Backofens hat dieser pro Backraum mindestens einen Temperatursensor. Hierüber kann pro Backraum mindestens ein Ist-Temperaturwert gemessen werden und mit einem über ein entsprechend angepasstes Backprogramm vorgegeben Soll-Temperaturwert verglichen werden. Je nach Abweichung von Ist- und Soll-Temperaturwert kann die dann als Regeleinrichtung arbeitende Steuereinrichtung Anpassungen an den Einschaltdauern der jeweils zugeordneten elektrischen Heizelemente zur Leistungsvorgabe vornehmen. Hierdurch ist ein geregelter Backraum-Temperaturbetrieb möglich.

Die Vorteile eines Betriebsverfahrens nach Anspruch 8 entsprechen denen, die vorstehend unter Bezugnahme auf den erfindungsgemäßen Backofen bereits erläutert wurden. Die mindestens zwei Sätze von Leistungswerten, die vorgegeben werden, können sich in mindestens einem Leistungswert oder auch in einer Mehrzahl von Leistungswerten oder auch in allen Leistungswerten unterscheiden. Der jeweilige Satz von Leistungswerten kann insbesondere als Satz von Einschaltdauern für die elektrischen Heizelemente vorgegeben sein. Die Leistungswerte beziehungsweise die Einschaltdauern können innerhalb eines Satzes individuell und insbesondere verschieden vorgebbar sein. Diese Leistungswerte beziehungsweise Einschaltdauern können aber auch, je nach den Erfordernissen des Backprogrammes, gleich sein. Leistungswerte beziehungsweise Einschaltdauern der verschiedenen Sätze können individuell vorgebbar und insbesondere verschieden sein, können aber auch, je nach den Erfordernissen des Backprogrammes, gleich sein.

Eine Backschritt-Vorgabe nach den Ansprüchen 9 oder 10 führt zu besonders flexibel vorgebbaren Backparametern.

Eine Backschritt-Vorgabe nach Anspruch 11 berücksichtigt, dass eine Backraumzone, die einer Entnahmeöffnung, also beispielsweise einer Backraumtür, benachbart ist, erhöhte Verluste erleidet. Entsprechende Verluste werden dann durch Vorgabe größerer Heiz-Leistungswerte für die Heizelemente ausgeglichen, die der Entnahmeöffnung jeweils benachbart sind.

Eine Backschritt-Vorgabe nach Anspruch 12 berücksichtigt, dass ein unterster Backraum eines Etagenbackofens keine Abwärme von einem darunterliegenden Backraum erhält. Dieser unterste Backraum wird dann mit einem größeren Leistungswert, also höherer Heizleistung, betrieben.

Die Leistungswert-Sätze könne auch in Form einer Regelung vorgegeben werden. Hierbei wird beispielsweise eine Soll-Backraumtemperatur vorgegeben, die auch Backraumzonenabhängig vorgegeben werden kann. Über Temperatursensoren des Backofens können dann diese Sollwerte mit Temperatur-Istwerten abgeglichen und durch entsprechende Leistungswert-Vorgaben in den Sätzen bei den Vorgabeschriften des Betriebsverfahrens berücksichtigt werden.

Ein Ausführungsbeispiel der Erfindung wird nachfolgend anhand der Zeichnung näher erläutert. In dieser zeigen:
- Fig. 1: schematisch einen vertikalen Längsschnitt durch einen elektrisch beheizten Etagenbackofen; und
- Fig. 2: schematisch ein Ablaufschema eines Verfahrens zum Betrieb des Etagenbackofens nach Fig. 1.

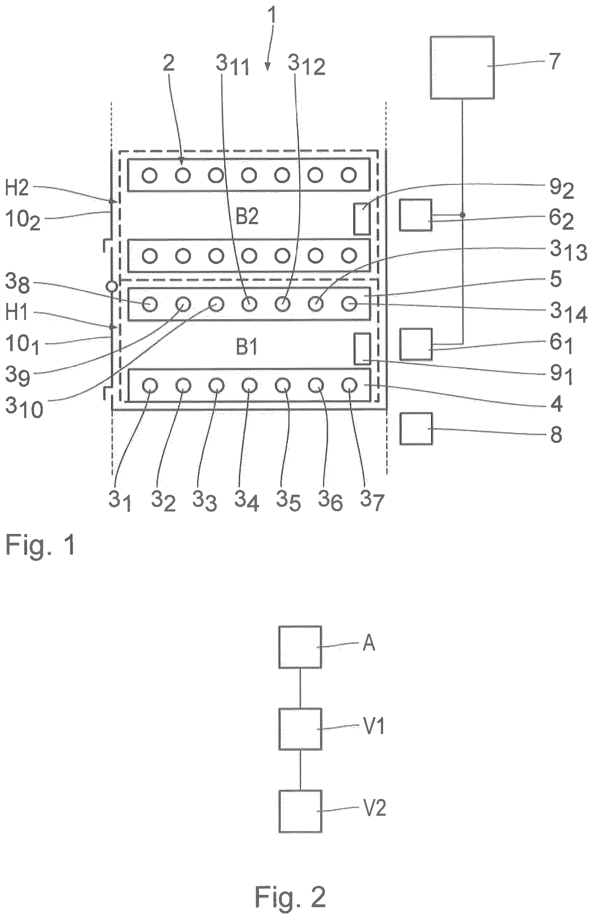

Ein als elektrisch beheizter Etagenbackofen ausgeführter Backofen 1 hat eine Mehrzahl von Herden H1, H2, ..., von denen in der Fig. 1, angedeutet durch gestrichelte Umgrenzungen, ein unterster Herd H1 und ein darüber liegender Herd H2 veranschaulicht sind. Jeder der Herde H1, H2, ... hat einen zugeordneten Backraum B1, B2, ...

Beim Backofen 1 kann es sich um einen industriellen Backofen oder auch um einen Ladenbackofen handeln.

Der Backofen 1 hat zur Beheizung der Backräume B1, B2, ... eine Heizquelle 2. Für jeden der Backräume B1, B2, ... umfasst die Heizquelle 2 jeweils eine gleiche Anordnung elektrischer Heizelemente 3ᵢ, sodass es nachfolgend genügt, die Heizelement-Anordnung des Backraums B1 zu beschreiben.

Die elektrischen Heizelemente 3ᵢ sind als elektrische Widerstands-Heizelemente, nämlich als Heizstäbe, ausgeführt, die in der Fig. 1 im Querschnitt dargestellt sind.

Die Heizquelle 2 hat insgesamt sieben Unterhitze-Heizelemente 3₁, 3₂, ... 3₇ und insgesamt sieben Oberhitze-Heizelemente 3₈ bis 3₁₄. Die Unterhitze-Heizelemente 3₁ bis 3₇ bilden eine Unterhitze-Heizeinrichtung 4 der Heizquelle 2. Die Heizelemente 3₈ bis 3₁₄ bilden eine Oberhitze-Heizeinrichtung 5 der Heizquelle 2. Die Unterhitze-Heizeinrichtung 4 und die Oberhitze-Heizeinrichtung 5 dienen als Unterhitze und Oberhitze für den Backraum B1.

Zur Bestromung der elektrischen Heizelemente 3ᵢ des jeweiligen Backraums Bi dient eine Leistungsschaltung 6;. In der Fig. 1 veranschaulicht sind die beiden Leistungsschaltungen 6₁, 6₂, die in nicht näher dargestellter Weise mit dem elektrischen Heizelement 3ᵢ in elektrischer Leistungsverbindung stehen. Die jeweilige Leistungsschaltung 6; kann in eine Unterhitze- und eine Oberhitze-Leistungsschaltung für den jeweiligen Herd Hi beziehungsweise Backraum Bi unterteilt sein. Die jeweilige Leistungsschaltung 6; ist so ausgeführt, dass jedes der elektrischen Heizelemente 3; unabhängig variabel bestromt werden kann.

Der Backofen 1 hat weiterhin eine Steuereinrichtung 7, die auch als Steuer/Regeleinrichtung ausgeführt sein kann. Die Steuereinrichtung 7 steht mit den Leistungsschaltungen 6ᵢ zur variablen Vorgabe einer Einschaltdauer ED der Leistungsschaltungen 6ᵢ in Signalverbindung. Die Einschaltdauer ED ist dabei ein Parameter, der jedem der elektrischen Heizelemente 3; individuell zugeordnet ist. Die Einschaltdauer ED ist ein Verhältnis aus einer Betriebsdauer BD, während der das elektrische Heizelement 3ᵢ mit seiner nominellen Leistung betrieben wird, beispielsweise mit einer Leistung im Bereich zwischen 200 W und 10 kW, insbesondere im Bereich zwischen 200 W und 1 kW, und einer vorgegebenen Nutzdauer ND des Backraums Bi, dem dieses elektrische Heizelement 3ᵢ zugeordnet ist. Es gilt also: ED = BD/ND.

Über die Einschaltdauer ED ist somit eine Steuerung der effektiven elektrischen Leistung des jeweiligen elektrischen Heizelements 3ᵢ möglich.

Die jeweilige Einschaltdauer ED kann über einen Tastgrad einer Impuls-Ansteuerung der jeweiligen Leistungsschaltung 6; über die Steuereinrichtung 7 variabel vorgegeben werden. Es gilt dann ED = τ/T wobei gilt;
τ: Impulsdauer der Impuls-Ansteuerung und
T: Periode der Impuls-Ansteuerung.

Alle elektrischen Heizelemente 3ᵢ des Backofens 1 könne die gleiche nominelle Leistung (Nennleistung) aufweisen, beispielsweise 200 W, 300 W, 400 W oder 500 W. Die elektrischen Heizelemente 3ᵢ können identisch ausgeführt sein.

Beim Betrieb des Backofens 1 wird zunächst ein Backprogramm abhängig von dem Backofen 1 zu backendem Backgut ausgewählt. Dies erfolgt in einem Auswahlschritt A (vgl. Fig. 2).

Die nachfolgende Tabelle 1 zeigt beispielshaft ein derartiges Backprogramm für das Backgut "Kaisersemmel". Jede Zeile der Tabelle 1 beschreibt einen Backschritt mit zugeordneter Temperatur, Zeitdauer in Minuten, Dampfmenge, die dem jeweiligen Backraum Bi über eine Beschwadungseinrichtung 8 zugeführt werden kann, sowie Öffnungsgrad in Prozent eines jeweiligen Schwadenschiebers 9; zum Abführen von Dampfschwaden aus dem zugeordneten Backraum Bii, zur Herstellung einer feuchtereduzierten Atmosphäre in diesem Backraum Bi

Die letzte Spalte des Backprogramms der Tabelle 1 gibt an, welcher Satz (Set) von Einschaltdauern für die jeweiligen Heizelemente 3; ausgewählt wird.

Beispiel Backprogramm - Kaisersemmel

**Tab. 1**

| Backschritt | Temperatur | Zeitdauer | Dampf | Schwadenschieber | Set |
|---|---|---|---|---|---|
| 1 | 230°C | 5 | 2 Liter | 0% | 001 |
| 2 | 235°C | 8 | 0 | 0% | 002 |
| 3 | 230°C | 1 | 0 | 100% | 001 |

Die nachfolgende Tabelle 2 gibt wiederum beispielhaft die Einschaltdauern ED in Prozent für die elektrischen Heizelemente 3ᵢ an. Diese Einschaltdauern sind tabelliert zunächst für die Unterhitze-Heizelemente 3₁ bis 3₇ des Herdes H1 (Spalten 1 bis 7). In der nachfolgenden Zeile sind die entsprechenden Einschaltdauern für die Oberhitze-Heizelemente 3₈ bis 3₁₄ (wiederum Spalten 1 bis 7 der Tabelle 2), wiederum des Herdes Hi, angegeben. Es folgen die Einschaltdauern für die Unterhitze-Heizelemente 3₁ bis 3₇ des darüber liegenden Herdes H2 und dann die Einschaltdauern für die Oberhitze-Heizelemente 3₈ bis 3₁₄ dieses darüber liegenden Herdes H2 (wiederum jeweils Spalten 1 bis 7).

Set Nr. 001 (Beispiel für ein Set bei einem Ofen mit 2 Herden)

**Tab. 2**

| | | 1 | 2 | 3 | 4 | 5 | 6 | 7 |
|---|---|---|---|---|---|---|---|---|
| HI | UH | 100% | 90% | 90% | 80% | 75% | 80% | 75% |
| H1 | OH | 100% | 95% | 85% | 85% | 80% | 80% | 75% |
| H2 | UH | 95% | 90% | 85% | 75% | 70% | 75% | 70% |
| H2 | OH | 95% | 90% | 80% | 80% | 80% | 75% | 70% |

Bei diesem Satz Nummer 001 hat beispielsweise das Heizelement 3₄ des Herdes H1 eine Einschaltdauer von 80%, sodass dieses Heizelement 3₄ also mit 80% seiner nominellen Leistung betrieben wird. Das Oberhitze-Heizelement 3₁₁ des Herdes H1 hat ein beim Satz Nummer 001 eine Einschaltdauer ED von 85%. Der in der Tabelle 2 dargestellte Satz von Einschaltdauern stellt ein Beispiel für einen Satz von Leistungswerten für die elektrischen Heizelemente (3ᵢ) dar.

Die Einschaltdauern sind beim Satz Nummer 001 so zugeordnet, dass diejenigen Heizelemente 3₁, 3s die Backraum-Türen 10₁, 10₂, ...der Backräume B1, B2 nächstbenachbart sind, eine größere Einschaltdauer aufweisen als die weiter entfernt von der Backraumtür 10ᵢ, also von der Entnahmeöffnung, angeordneten elektrischen Heizelemente 3₂, 3₃, ... beziehungsweise 3₉, 3₁₀, ...

Zudem sind beim Satz Nummer 001 die Einschaltdauern den elektrischen Heizelementen so zugeordnet, dass Einschaltdauern die elektrischen Heizelemente 3ᵢ des untersten Herdes H1 tendenziell größer sind als diejenigen der elektrischen Heizelemente 3ᵢ des darüber liegenden Herdes H2. Das elektrische Heizelement 3₁ des Herdes H1 hat beispielsweise eine Einschaltdauer von 100% und das elektrische Heizelement 3₁ des Herdes H2 hat eine im Vergleich hierzu geringere Einschaltdauer von 95%.

Dieser Satz Nummer 001 ist so kalibriert, dass sich in den Backräumen B1 und B2 bei Anwendung dieses Satzes Nummer 001 die gewünschte Temperatur von 230 Grad C gleichmäßig über eine gesamte Tiefe der Backräume B1, B2 einstellt.

Es wird nun zunächst der erste Backschritt des Backprogramms gemäß Tabelle 1 vorgegeben. Dies erfolgt in einem Vorgabeschritt V1. Bei diesem ersten Backschritt kommt der Satz Nummer 001 gemäß der Tabelle 2 zum Einsatz, wie vorstehend erläutert.

Nun wird der zweite Backschritt des Backprogramms nach Tabelle 1 vorgegeben. Dies erfolgt in einem weiteren Vorgabeschritt V2. Dies erfolgt unter anderem anhand des schematischen Ablaufschemas der Fig. 2.

Bei diesem Backschritt 2 kommt ein weiterer Satz Nummer 002 gemäß der untenstehende Tabelle 3 von den elektrischen Heizelementen 3ᵢ zugeordneten Einschaltdauern ED zum Einsatz, der sich vom Satz Nummer 001 nach Tabelle 2 unterscheidet.

Set Nr. 002

**Tab. 3**

| | | 1 | 2 | 3 | 4 | 5 | 6 | 7 |
|---|---|---|---|---|---|---|---|---|
| HI | UH | 95% | 85% | 85% | 75% | 70% | 75% | 70% |
| H1 | OH | 95% | 90% | 80% | 80% | 75% | 75% | 70% |
| H2 | UH | 90% | 85% | 80% | 70% | 65% | 70% | 65% |
| H2 | OH | 90% | 85% | 75% | 75% | 75% | 70% | 65% |

Die Einschaltdauern dieses Satzes Nummer 002 sind so kalibriert, dass sich unter Einbeziehung der sonstigen Parameter des Backschritts 2 (keine Dampfzugabe) die gewünschte Backraum-Temperatur von 235 Grad C ergibt.

Beim Backofenbetrieb erfolgt nachfolgend die Auswahl noch eines weiteren, dritten Backschritts, der dem Backschritt 1 bis auf die Tatsache, dass keine Schwadenzugabe erfolgt, entspricht. Auch beim dritten Backschritt kommt wiederum der Satz Nummer 001 gemäß Tabelle 2 zum Einsatz.

Nach Abfolge der Backschritte ist das Backgut, in diesem Fall Kaisersemmeln, fertig ausgebacken.

Die variable Vorgabe der Einschaltdauer stellt eine Möglichkeit dar, die Leistung von elektrischen Heizelementen mit gleicher nomineller Leistung variabel vorzugeben. Alternativ zur variablen Vorgabe einer Einschaltdauer können auch andere Betriebsparameter des jeweiligen elektrischen Heizelements 3ᵢ variabel vorgegeben werden, zum Beispiel eine Stromstärke, mit der das elektrische Heizelement betrieben wird, eine elektrische Spannung, mit der das elektrische Heizelement betrieben wird und/oder eine Verschiebung einer Phasenbeziehung zwischen Spannung und Strom eines Wechselstroms.

Zur Leistungssteuerung können die grundsätzlich bekannten Steuerverfahren:
- Steuerung über ein pulsweiten-moduliertes Signal,
- Phasenanschnittsteuerung,
- Schwingungspaket-Steuerung
zum Einsatz kommen.

Je nach backendem Backgut kann im Backofen 1 ein angepasstes Backprogramm mit hierein wiederum angepassten Einschaltdauer-Sätzen für die elektrischen Heizelemente 3ᵢ hinterlegt sein.

Die verschiedenen Sätze 001, 002, ... können vom Nutzer des Backofens angelegt und nach Wahl angepasst werden. Hierzu kann der Backofen 1 mit einer entsprechenden Eingabe ausgestattet sein. Es ist auch möglich, durch entsprechende Einstellungen insbesondere über einen Fernzugriff auf den Backofen 1 eine Anpassung der Einschaltdauer-Sätze vorzunehmen.

## Patentansprüche

1. Backofen (1)
- mit mindestens einem Backraum (B1, B2, ...),
- mit einer Heizquelle (2) zur Beheizung des Backraumes (B1, B2, ...), aufweisend:
-- mindestens ein elektrisches Heizelement (3ᵢ),
-- eine Leistungsschaltung (6ᵢ) zur Bestromung des elektrischen Heizelements (3ᵢ),
- mit einer Steuereinrichtung (7), die mit der Leistungsschaltung (6ᵢ) zur variablen Vorgabe einer Heizleistung in Signalverbindung steht, mit der das elektrische Heizelement (3;) betrieben wird,
- wobei der Backofen als Etagenbackofen mit mindestens zwei übereinander angeordneten Backräumen (Bi) ausgeführt ist,
- wobei die Heizquelle (2) mindestens zwei elektrische Heizelemente (3;) aufweist und wobei jedem Backraum (Bi) mindestens eines der elektrischen Heizelemente (3;) zugeordnet ist

2. Backofen nach Anspruch 1, **dadurch gekennzeichnet, dass** die Steuereinrichtung (7) mit der Leistungsschaltung (6ᵢ) zur variablen Vorgabe einer Einschaltdauer (ED) der Leistungsschaltung (6ᵢ) in Signalverbindung steht, wobei die Einschaltdauer (ED) ein Verhältnis aus:
- einer Betriebsdauer (BD) während der das elektrische Heizelement (3ᵢ) mit seiner nominellen Leistung betrieben wird, und
- einer vorgegebenen Nutzdauer (ND) des Backraumes (Bi) darstellt.

3. Backofen nach Anspruch 1 oder 2, **dadurch gekennzeichnet, dass** die elektrischen Heizelemente (3ᵢ) jeweils gleiche Nennleistung aufweisen.

4. Backofen nach einem der Ansprüche 1 bis 3, **dadurch gekennzeichnet, dass** die Heizquelle (2) pro Backraum (Bi) mindestens zwei elektrische Heizelemente (3ᵢ) aufweist, wobei eines der elektrischen Heizelemente (3₈ bis 3₁₄) als Oberhitze-Heizelement und ein weiteres der elektrischen Heizelemente (3₁ bis 3₇) als Unterhitze-Heizelement ausgeführt ist.

5. Backofen nach einem der Ansprüche 1 bis 4, **dadurch gekennzeichnet, dass** die Heizquelle (2) pro Backraum (Bi) mindestens zwei elektrische Heizelemente (3ᵢ) aufweist, die als Oberhitze-Heizelemente (3₈ bis 3₁₄) ausgeführt sind.

6. Backofen nach einem der Ansprüche 1 bis 5, **dadurch gekennzeichnet, dass** die Heizquelle (2) pro Backraum (Bi) mindestens zwei elektrische Heizelemente (3ᵢ) aufweist, die als Unterhitze-Heizelemente (3₁ bis 3₇) ausgeführt sind.

7. Backofen nach einem Ansprüche 2 bis 6, **gekennzeichnet durch** eine Ausführung derart, dass die Einschaltdauer (ED) über einen Tastgrad (τ/T) einer Ansteuerung der Leistungsschaltung (6ᵢ) über die Steuereinrichtung (7) variabel vorgegeben wird.

8. Verfahren zum Betrieb eines Backofens (1) nach einem der Ansprüche 1 bis 7, mit folgenden Schritten:
- Auswählen eines Backprogramms abhängig von im Backofen (1) zu backendem Backgut,
- Vorgeben eines ersten Backschritts des Backprogramms mit einem ersten Satz von Leistungswerten für die elektrischen Heizelemente (3ᵢ), wobei innerhalb des ersten Satzes von Leistungswerten jedem der elektrischen Heizelemente (3ᵢ) ein individueller Leistungswert zugeordnet ist,
- Vorgeben mindestens weiteren Backschritts des Backprogramms mit einem weiteren Satz von Leistungswerten für die elektrischen Heizelemente (3ᵢ), wobei innerhalb des weiteren Satzes von Leistungswerten jedem der elektrischen Heizelemente (3ᵢ) ein individueller Leistungswert zugeordnet ist.

9. Verfahren nach Anspruch 8, **gekennzeichnet durch** eine Backschritt-Vorgabe derart, dass mindestens zwei Leistungswerte innerhalb eines der Sätze verschieden sind.

10. Verfahren nach Anspruch 8 oder 9, **gekennzeichnet durch** eine Backschritt-Vorgabe derart, dass sich Leistungswerte der verschiedenen Sätze, die dem gleichen elektrischen Heizelement (3ᵢ) zugeordnet sind, unterscheiden.

11. Verfahren nach einem der Ansprüche 8 bis 10, **gekennzeichnet durch** eine Backschritt-Vorgabe derart, dass bei mindestens einem (3₁) der elektrischen Heizelemente (3ᵢ), das einer Entnahmeöffnung (10ᵢ) des Backraums (Bi) nächst benachbart ist, ein größerer Leistungswert innerhalb eines Satzes vorgegeben ist, als bei einem weiteren (3₂, ... 3₇) der elektrischen Heizelemente (3₁ bis 3₇), das weiter entfernt von der Entnahmeöffnung (10ᵢ) angeordnet ist.

12. Verfahren nach einem Ansprüche 8 bis 11, zum Betrieb eines Etagenbackofens nach Anspruch 3, **gekennzeichnet durch** eine Backschritt-Vorgabe derart, dass bei mindestens einem der elektrischen Heizelemente (3₁ bis 3₁₄), das einem untersten Backraum (B1) zugeordnet ist, ein größerer Leistungswert innerhalb eines Satzes vorgegeben ist als bei einem weiteren der elektrischen Heizelemente (3₁ bis 3₁₄), das einem weiter obenliegenden Backraum (B2) zugeordnet ist.
